# DEMANDE DE BREVET EUROPEEN

(11) **EP 1 939 963 A1**
(43) Date de publication de la demande: **02.07.2008**
(21) Numéro de dépôt: 07023943.9
(22) Date de dépôt: 11.12.2007
(51) Int. Cl.: H01M 8/00, H01M 8/06

(54) **Groupe electrogene comportant une pile a combustible**

(30) Priorité: 27.12.2006 FR 0611512
(71) Demandeur: Société de Technologie Michelin, 63000 Clermont-Ferrand (FR); Michelin Recherche et Technique, 1763 Granges-Paccot (CH)
(72) Inventeur: Delfino, Antonio, 1772 Grolley (CH)
(74) Mandataire: Bauvir, Jacques

(57) **Abrégé**

Pour améliorer le schéma d'installation d'une pile à combustible, notamment dans le cas de piles embarquées pour véhicules à traction électrique, on produit l'oxygène nécessaire à l'alimentation de la pile in situ par une séparation de l'azote de l'air ambiant en continu sans changement d'état. Ainsi un groupe électrogène comprend un empilement de cellules électrochimiques possédant chacune une cathode et une anode, en relation de couplage électrochimique avec un électrolyte, et un circuit électrique de sortie propre à relier la cathode et l'anode à travers une charge, un dispositif de fourniture de carburant à l'anode et un générateur d'oxygène embarqué basé sur un séparateur sans changement d'état de l'oxygène et de l'azote de l'air ambiant pour l'alimentation de cathode des cellules. Selon une forme préférée, le séparateur est du type à adsorption d'azote à pressions alternées. Dans une réalisation le séparateur est alimenté en air comprimé par un premier compresseur et l'oxygène délivré à sa sortie est surcomprimé pour alimenter la pile. L'ensemble permet d'atteindre un compromis de performances amélioré pour des applications véhicule où une large autonomie est nécessaire.

## Description

### DOMAINE DE L'lNVENTION

La présente invention est relative aux piles à combustible, notamment les piles installées à bord de véhicules à traction électrique pour produire directement le courant nécessaire à partir d'une source de combustible embarquée.

### ETAT DE LA TECHNIQUE

On sait que les piles à combustible permettent la production d'énergie électrique par une réaction d'oxydoréduction électrochimique, à partir d'hydrogène ou d'un autre matériau réducteur (le carburant) et d'oxygène (le comburant), sans passer par une conversion en énergie mécanique. Cette technologie semble prometteuse pour les applications au domaine des transports de quelque nature que ce soit, notamment aux véhicules automobiles.

Une pile à combustible comporte en général l'association en série de cellules élémentaires qui, chacune, comprennent essentiellement une anode et une cathode couplées en relation de conduction électrique par un électrolyte. Un type d'électrolyte qui se prête bien, par exemple, aux applications automobiles est un électrolyte solide constitué essentiellement par une membrane polymère permettant le passage d'ions positifs de l'anode à la cathode.

Dans son fonctionnement normal, une pile à combustible hydrogène consomme de l'hydrogène (le carburant) et de l'oxygène (le comburant) fourni par l'air ambiant ou sous forme de gaz pur. La pile à combustible est le siège d'une réaction anodique par laquelle l'hydrogène (H₂) se transforme en protons hydrogènes (2H⁺) qui traversent la membrane polymère et en électrons (2e-) qui circulent dans le circuit électrique extérieur. La pile à combustible est en même temps le siège d'une réaction cathodique par laquelle les protons hydrogène (2H⁺), les électrons (2e⁻) se combinent avec l'oxygène (1/2O₂) pour produire de l'eau (H₂O).

En ce qui concerne le carburant, soit on dispose d'une alimentation en hydrogène, soit on produit l'hydrogène dont on a besoin près de la pile à combustible au moyen d'un reformeur lui-même alimenté par exemple par un hydrocarbure. Dans le cas d'un véhicule la première solution requiert un réservoir d'hydrogène embarqué.

En ce qui concerne le comburant, soit on alimente la pile à combustible en oxygène pur, ce qui, dans le cas d'une pile à combustible embarquée, implique l'emploi d'un réservoir d'oxygène pur à bord du véhicule, soit on alimente la pile à combustible en air atmosphérique ambiant comprimé et on rejette en aval de la pile à combustible le gaz en excès dans lequel la proportion d'oxygène a diminué. Cette dernière solution a le mérite de la pérennité de l'alimentation en comburant. Elle souffre cependant du fait que le rendement de la pile alimentée par de l'air est plus faible que celui obtenu avec de l'oxygène pur. Ceci conduit à prévoir, à puissance utile égale, une pile beaucoup plus lourde et plus volumineuse dans le cas où l'alimentation est réalisée directement à partir de l'air ambiant que dans celui d'une alimentation en oxygène pur.

On rencontre évidemment le problème inverse avec les alimentations à l'oxygène pur, à savoir que le meilleur rendement de la pile est contrecarré par l'obligation de stocker l'oxygène pur à bord du véhicule. Etant donné qu'une réserve d'hydrogène est également indispensable dans ce cas, cela implique deux réservoirs de stockage à bord du véhicule. La capacité et donc le dimensionnement de ces réservoirs dépend de l'autonomie que l'on souhaite conférer au véhicule. Plus on souhaite une autonomie longue (en distance et/ou en durée de fonctionnement) et plus les réservoirs doivent être volumineux et donc lourds. Ainsi au-delà d'une certaine autonomie le gain en compacité de la pile à combustible résultant de l'emploi d'oxygène pur est annulé par l'augmentation d'encombrement et de poids du réservoir d'oxygène nécessaire aux performances du véhicule.

Il serait donc avantageux de pouvoir améliorer le schéma d'installation d'une pile à combustible notamment dans le cas de piles destinées à être embarquées pour fonctionner à bord d'un véhicule, en particulier un véhicule à propulsion électrique.

### BREVE DESCRIPTION DE L'INVENTION

A cet effet l'invention prévoit de faire fonctionner la pile avec une alimentation en gaz d'oxygène obtenu par une séparation de l'azote de l'air ambiant réalisée in situ en continu à bord du véhicule. Plus spécifiquement, un groupe électrogène à pile à combustible conforme à l'invention comprend un empilement de cellules élémentaires, comprenant chacune une cathode et une anode en relation électrochimique avec un électrolyte, et comprend des bornes électriques de sortie propres à relier le générateur à une charge électrique, le groupe comportant un dispositif de fourniture de carburant à la pile à combustible et comprend un système d'alimentation de la pile à combustible avec un gaz comburant à base d'oxygène tiré de l'air ambiant, ledit système comprenant au moins un séparateur des composants de l'air par filtration sans changement d'état.

Selon une forme préférée, le séparateur est du type à adsorption à pressions alternées (PSA). Un compresseur d'entrée relié à l'air ambiant est alors prévu pour alimenter l'entrée du séparateur en air à décomposer sous pression. En outre on peut avantageusement choisir de comprimer le gaz enrichi en oxygène recueilli à la sortie du séparateur pour alimenter le circuit d'alimentation de cathode de chaque cellule de la pile à une pression supérieure à celle de l'air alimentant le séparateur. Avec un séparateur à adsorption d'azote par pression alternées, fonctionnant avec des filtres à zéolites, la pression d'entrée d'air est typiquement de l'ordre de 2 bars absolus. A sa sortie, le gaz comburant a une teneur en oxygène supérieure à 95 %. On le comprime alors de préférence à 3 ou 4 bars absolus avant son admission dans les cellules de la pile en vue d'un rendement optimum de la conversion électrochimique.

Des appareils de décomposition des éléments de l'air qui ne font pas appel à des installations de liquéfaction et de distillation lourdes et onéreuses sont apparus depuis de nombreuses années déjà. L'intérêt pour ces techniques a connu un certain essor dans l'industrie aéronautique, en liaison notamment avec le transport des personnes. Les altitudes de vol de plus en plus élevées et la raréfaction consécutive de l'air ambiant imposent en effet l'emploi d'installations propres à générer une atmosphère qui permette aux êtres vivants de respirer convenablement pendant toute la durée des vols malgré la raréfaction de l'air ambiant.

C'est ainsi que pour répondre aux besoin des pilotes d'appareils volants militaires ont été appliquées des techniques de décomposition de l'air par des procédés physiques sans changement d'état à bord de ces appareils. Les générateurs utilisés pour ces applications embarquées répondent à l'appellation générique d'OBOGS (On-Board Oxygen Generation System).

Ils font appel à des technologies apparues depuis plus de trente années qui sont fondées sur les propriétés de certains matériaux pour filtrer sélectivement l'oxygène ou l'azote de l'air, par des processus d'adsorption dans des zéolites ou de perméation sélective à travers des membranes polymères.

La décomposition de l'air par adsorption à pressions alternées (PSA) est une de ces techniques. Elle est fondée sur les propriétés de certaines structures zéolites pour adsorber l'azote, de préférence à l'oxygène, à une pression supérieure à la pression atmosphérique, ce qui permet de réaliser une séparation des deux gaz. L'azote peut ensuite être désorbé par abaissement de la pression environnant le tamis moléculaire en zéolite. Le document de brevet EP 026694 A1 publié le 8 avril 1981 fournit un exemple de processus de séparation PSA à deux colonnes.

Les documents de brevets EP 1 375 349 B1 publié le 01 juin 2005 et WO 2005/0029966 A1 décrivent tous les deux des applications des techniques du type précité à des fins embarquées, seuls ou en combinaison avec des générateurs de gaz inertes fonctionnant sur le même principe.

Il apparaît cependant que l'emploi de ces techniques dans le domaine embarqué soit resté limité pour l'essentiel à des applications assez très spécifiques ne nécessitant pas de débits relativement élevés, même si les travaux publiés reflètent un certain intérêt pour le conditionnement atmosphérique de secours dans l'aéronautique commerciale ou pour fabriquer des atmosphères inertes à base d'azote, en vue de limiter les déflagrations ou les risques de voir se développer des atmosphères explosives dans des espaces confinés.

Or la demanderesse s'est aperçue que face aux développements actuels des piles à combustible dans le domaine automobile, qui nécessitent des débits substantiels de gaz, on pouvait aboutir à des compromis intéressants entre les impératifs de masse embarquée et de performance désirables si l'on adaptait les principes de génération d'oxygène mentionnées ci-dessus à la fourniture de gaz comburant aux piles à combustibles pour l'alimentation de véhicules à traction électrique.

C'est ainsi qu'on a équipé un véhicule automobile pesant 850 Kg. avec une pile à combustible hydrogène du type à électrolyte polymère, comportant un empilements d'une centaine de cellules fournissant une puissance électrique nominale de 30 kW.

L'ensemble est alimenté en hydrogène à partir d'un réservoir d'hydrogène sous pression de 120 litres. Avec cette réserve, la pile est capable de fournir l'énergie nécessaire pour conférer au véhicule une autonomie de 400 kilomètres en parcours routier (ou ville/campagne) moyen avec des performances convenables pour la catégorie de véhicule mentionnée ci-dessus. La pile à combustible est alimentée en un gaz d'oxygène enrichi à partir d'un séparateur des composants de l'air ambiant au véhicule de type OBOGS qui fournit un débit d'oxygène enrichi compatible avec les performances indiquées du véhicule. Le poids de l'OBOGS s'élève à 60 kg. Il est aussi connu d'alimenter une pile à combustible en oxygène pur. Dans ce cas, pour atteindre l'autonomie kilométrique indiquée ci-dessus, le poids d'un réservoir d'oxygène pur sous pression de 350 bars s'élève à 66 kg. Pour cette autonomie, il faut 16 kg d'oxygène, d'où un poids total de 82 kg. Pour une autonomie supérieure, la quantité d'oxygène pur embarquée et le poids du réservoir augmentent corrélativement. Par contre, le poids de l'OBOGS reste constant puisqu'il est indépendant de l'autonomie.

Il s'avère ainsi que l'invention permet de réaliser des véhicules équipés de piles à combustibles fonctionnant à l'oxygène pur avantageux dans des segments d'application à des véhicules à long rayon d'action, des véhicules chargés (poids lourds) sur de longues distances ou des véhicules très légers nécessitant une autonomie élevée, tels que par exemple dans le domaine aérien, etc.

En plus des avantages inhérents à la formule d'alimentation conforme à l'invention on peut en développer d'autres en fonction de certaines particularités du générateur de gaz comburant concerné. Dans la mesure en effet où ces générateurs sont basés sur une séparation de l'azote et des autres gaz de l'air on peut prévoir d'aménager à côté d'une première sortie de gaz riche en oxygène raccordée à une conduite d'alimentation cathode en comburant, une deuxième sortie de gaz riche en éléments inertes vis-à-vis des réactions d'oxydation, notamment d'azote. Cette deuxième sortie peut alors être reliée à une enveloppe propre à entourer la pile d'une atmosphère essentiellement inerte.

Selon un autre aspect complémentaire de l'invention, cette deuxième sortie peut être reliée sélectivement aux conduits d'alimentation de la pile en gaz pour aider à l'extinction de celle-ci en réponse à une commande d'interruption de son circuit électrique de sortie. De préférence dans ce cas on utilise directement ces gaz sous pression sans les avoir détendus à la sortie du séparateur.

Pour améliorer encore le rendement global de l'installation, lorsque la deuxième sortie du séparateur véhicule des produits gazeux inertes sous une pression supérieure à la pression atmosphérique, on peut récupérer tout ou partie de l'énergie de compression ces produits en les amenant à l'entrée d'une turbine dont la sortie mécanique aide à entraîner le compresseur de l'air d'entrée du séparateur. Les gaz détendus à la sortie de la turbine peuvent être alors utilisés pour constituer une atmosphère inerte autour de la pile à combustible seule ou de l'ensemble de l'installation.

### BREVE DESCRIPTION DES FIGURES

D'autres caractéristiques et avantages de l'invention ressortent de la description faite ci-après en référence aux dessins annexés qui montrent, à titre d'exemples non limitatifs, des formes de réalisation de l'objet de l'invention et dans lesquels:

la figure 1 est une représentation très schématique d'une alimentation de pile à combustible hydrogène en oxygène à partir d'u compresseur de l'air ambiant;

la figure 2 est une représentation très schématique d'une alimentation de pile à combustible hydrogène à partir d'un système de séparation des composants de l'air ambiant par adsorption à pressions alternées; et

la figure 3 représente schématiquement le principe de fonctionnement d'un séparateur de composants de l'air fonctionnant par adsorption à pressions alternées (Système PSA), tel qu'utilisé dans le système de la figure 2.

### DESCRIPTION D'UN OU PLUSIEURS EXEMPLES DE REALISATION DE L'INVENTION

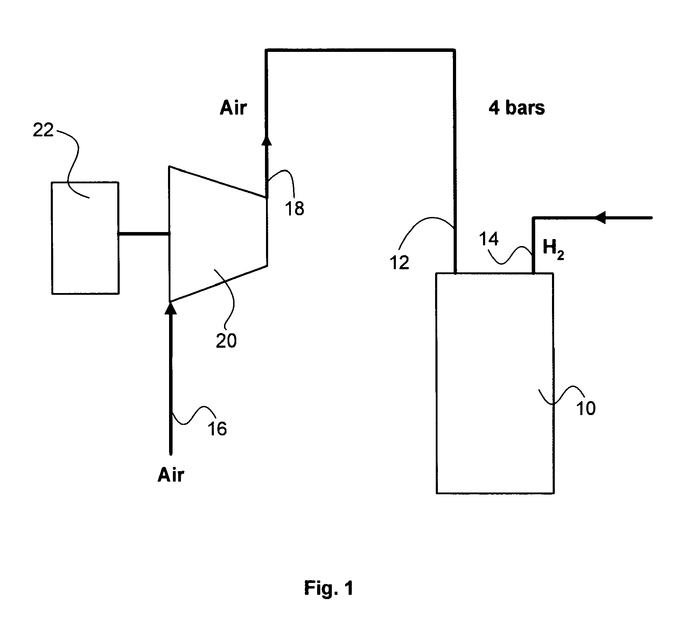

Sur la figure 1, une pile à combustible hydrogène 10 est composée d'un empilement de cellules ou éléments électrolytiques individuels comportant chacune une anode et une cathode, couplées de manière électrochimique par un électrolyte solide. La pile 10 comporte deux conduits d'entrée d'alimentation en gaz. Le premier 12 reçoit de l'air sous une pression de quatre bars absolus environ, dans cet exemple (c'est à dire trois bars au dessus de la pression atmosphérique), et apporte donc de l'oxygène comburant, mêlé aux autres composants de l'air, à l'entrée de cathode de chaque élément de la pile. L'air comprimé arrivant sur l'entrée du conduit 12 est fourni par la sortie 18 d'un compresseur 20 , relié à une prise d'air 16. Le deuxième conduit 14 est alimenté en hydrogène gazeux à partir d'une réservoir d'hydrogène non représenté. Il est relié à l'entrée d'anode de chacune des éléments de la pile 10, de manière connue non représentée.

Le compresseur 20 est entraîné par un moteur électrique 22 dont l'énergie provient de la pile à combustible. Outre l'apport de comburant, l'air sous pression ainsi amené à la pile remplit deux autres fonctions. D'une part, il amène à l'entrée côté cathode des cellules élémentaires une humidité dûment dosée pour assurer la conduction des ions au niveau de la membrane électrolyte solide. D'autre part, il est utilisé pour chasser l'eau produite dans le canal de distribution du gaz et l'entraîner à l'extérieur. La perte de charge créée à l'intérieur du circuit de gaz de la pile doit être suffisante pour remplir cette fonction.

Or on sait qu'une pile à combustible fonctionne avec un certain excès de gaz comburant par rapport aux proportions stoechiométriques exactes. Pour une pile à combustible alimentée en oxygène pur, l'excès d'oxygène est de l'ordre de 20% (c'est à dire une stoechiométrie de 1,2). Mais pour une pile à combustible alimente en air ambiant, afin qu'il y ait suffisamment d'oxygène comburant à l'entrée de la pile pour consommer la totalité des ions hydrogène, il est nécessaire de fonctionner avec un excès d'air bien plus important. En effet, l'air ambiant contient environ 80% d'azote, gaz neutre totalement inutile à la réaction. Mais au fur et à mesure que l'air chemine le long des canaux de distribution entre l'entrée et la sortie des plaques bipolaires, il s'appauvrit en oxygène puisque celui-ci est ionisé puis recombiné avec les ions hydrogènes pour former de l'eau. Pour compenser cet appauvrissement, il faut augmenter l'excès d'air. C'est pour cela qu'une pile à combustible alimentée en air ambiant fonctionne avec un excès d'air de l'ordre de 100% (c'est à dire une stoechiométrie de 2,0). D'où une perte énergétique considérable en compression d'une très grande quantité d'air. En outre, l'humidification de l'air nécessaire au moins aux phases de démarrage de la pile à combustible oblige à utiliser d'autant plus d'eau que l'on fonctionne avec un grand excès d'air.

La consommation d'énergie nécessaire pour effectuer la pressurisation de l'air est un facteur qui doit être comptabilisé au passif du bilan énergétique de la pile dont elle grève évidemment le rendement.

D'un façon plus générale, il serait souhaitable d'améliorer le compromis entre les différents critères à prendre en compte pour alimenter des piles à combustible sur des véhicules à traction partiellement ou totalement électrique. Parmi ces critères figurent notamment le besoin d'autonomie entre les étapes de rechargement en matières consommables, les coûts unitaires de la consommation d'énergie embarquée, la masse des stockages de consommables, ainsi que la masse totale du générateur embarqué sur le véhicule.

Or les auteurs de l'invention se sont aperçus qu'on pouvait trouver un nouveau compromis intéressant entre ces différents facteurs en effectuant l'extraction d'oxygène pur, ou presque pur, à partir de l'air ambiant à bord du véhicule lui-même, à l'aide d'un système de séparation par filtration sans changement d'état, quitte à admettre un éventuel supplément de poids consécutif à une telle installation par rapport à celle d'un système de compression d'air ambiant, tel que celui qui vient d'être rappelé. Dans de nombreux cas, ce compromis s'avère aussi plus performant que l'embarquement d'une réserve de gaz comburant à bord du véhicule. L'avantage est d'autant plus marquant que les besoins en énergie (masses à déplacer) et en autonomie (temps/distance à parcourir) sont importants. comme c'est le cas fréquemment pour les véhicules automobiles terrestres habituels, notamment dans les applications aux véhicules poids lourds, voire également dans le cas des véhicules aériens.

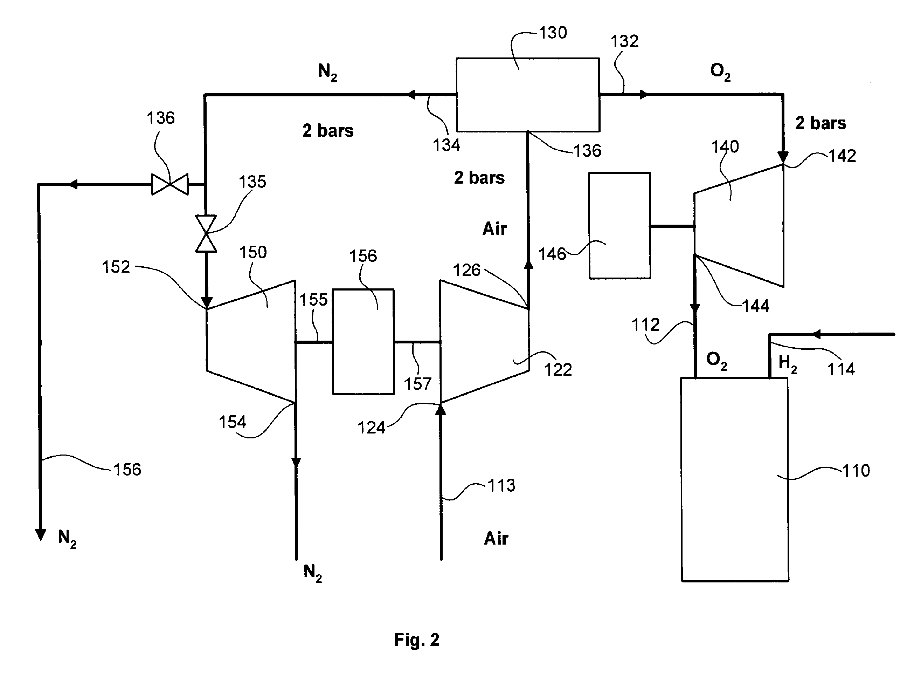

Sur la figure 2, une pile à combustible 110, pour installation sur un véhicule non représenté, est alimentée en hydrogène par un conduit d'entrée 114 et en gaz comburant riche en oxygène par un conduit d'entrée 112. Ce gaz est obtenu à partir d'une séparation de l'oxygène et de l'azote de l'air ambiant par un générateur d'oxygène embarqué à bord du véhicule 130, désigné par le sigle OBOGS.

Une prise d'entrée 113 d'air ambiant au véhicule alimente l'entrée 124 d'un premier compresseur 122, dit de "basse pression", dont la sortie 126 délivre à l'entrée 136 du générateur OBOGS 130 de l'air comprimé à une pression d'environ 2 bars absolus (soit 1 bar au dessus de la pression atmosphérique) dans le présent exemple.

Le générateur OBOGS possède une sortie de gaz très enrichi en oxygène 132 reliée à l'entrée 142 d'un deuxième compresseur 140, dit ici "compresseur haute pression" dont la sortie 144 alimente directement le conduit d'entrée 112 de la pile 110 sous une pression d'environ 4 bars absolus, soit trois bars au dessus de la pression atmosphérique ambiante. Le compresseur 140 est entraîné par un moteur électrique 146 tirant son énergie de celle fournie par la pile d'une manière non représentée. Le générateur OBOGS 130 comporte une deuxième sortie 134 de gaz inerte très riche en azote. Elle est reliée, d'une part, via une vanne de commande 135, à l'entrée 152 d'une turbine 150 qui fournit à sa sortie 154 un échappement de gaz d' azote détendu à une pression voisine de l'ambiante et, d'autre part, via une autre vanne de commande 136 à une prise de sortie 156 de gaz d'azote non détendu, dite haute pression, dont il sera question plus loin. Conformément au fonctionnement du générateur OBOGS qui va être développé ci-après, la pression des gaz fournis par le générateur OBOGS sur ses sorties 132 (02) et 134 (N2) est d'environ 2 bars absolus dans cet exemple. Ainsi la turbine 150 qui détend une partie au moins du gaz d'azote produit par le générateur OBOGS permet de récupérer sur son arbre 155 une énergie mécanique qui peut être employée par exemple pour contribuer à l'entraînement du premier compresseur 122. On a illustré schématiquement cette possibilité en représentant un couplage de l'arbre de sortie 155 avec l'axe de sortie 157 d'un moteur électrique 156 qui entraîne le compresseur 122.

Le principe de la séparation par adsorption à pressions alternées (PSA) repose sur les propriétés de certains matériaux, notamment des zéolites, d'adsorber préférentiellement l'azote d'un flux d'air envoyé sous pression super atmosphérique (pression supérieure à 1 bar) en laissant passer l'oxygène sans qu'il soit piégé. Ces matériaux jouent donc un rôle de filtre à sec et sans changement d'état pour assurer une séparation entre les deux principaux constituants de l'air. Lorsque le matériau du filtre est saturé d'azote il peut être régénéré par désorption de l'azote à la pression atmosphérique. En pratique l'opération s'exécute en purgeant l'enceinte du filtre saturé avec une petite partie du gaz riche en oxygène préalablement produit au cours de la phase d'adsorption. C'est ce cycle de pressurisation et dépressurisation qui a donné son nom au procédé PSA.

Les zéolites sont des minéraux aluminosilicates avec une structure cristalline complexe. Cette structure peut être comparée à celle d'une cage comportant des trous sur les côtés. Les molécules d'azote sous pression se trouvent sélectivement piégées dans les mailles de la structure qu'elles pénètrent par les trous. La composition chimique des zéolites qui peuvent être utilisés ici pour l'application de séparation décrite est la suivante :

### Nal2[(AlO2)12(SiO2)12].27H2O

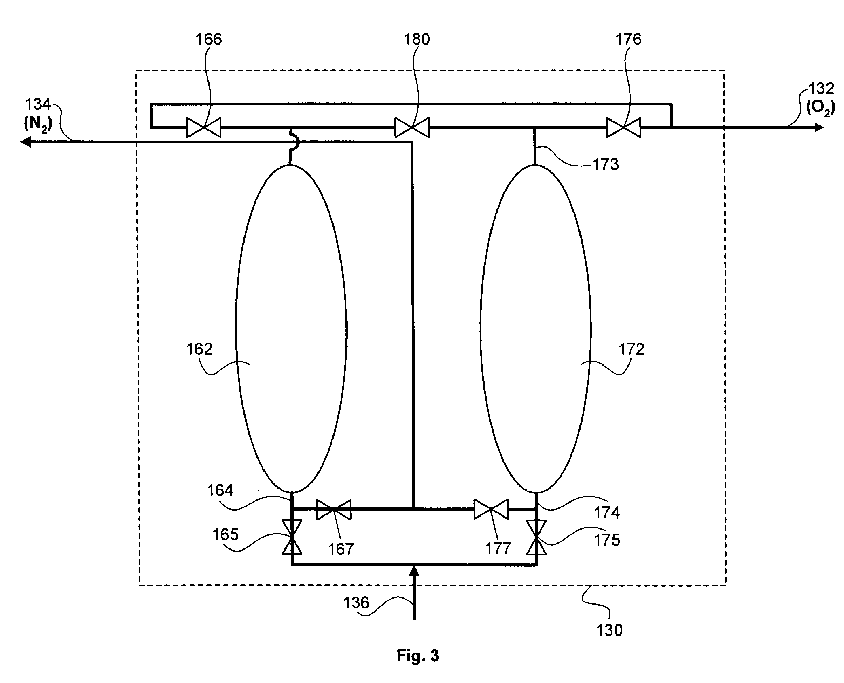

Le fonctionnement du générateur OBOGS est décrit en référence à la figure 3 où l'on reconnaît l'entrée d'air comprimé à 2 bars absolus 136 du boîtier OBOGS 130 et ses sorties 132, pour le gaz enrichi en oxygène, et 134, pour le gaz inerte riche en azote. Le générateur proprement dit est composé essentiellement de deux enceintes de filtrage par adsorption désorption alternées 162 et 172. Ces enceintes sont remplies de zéolite, comme il vient d'être expliqué. Un jeu de vannes de régulation permet de commander le cycle d'admission et d'échappement alternés qui réalise la séparation des gaz de l'air entrant par pressions alternées.

Plus spécifiquement, l'entrée d'air comprimé 136 est reliée aux entrées 164 et 174 des deux enceintes 162 et 172 respectivement par deux vannes 165 et 175. En outre les entrées 164 et 174 des enceintes peuvent être reliées sélectivement pour purger ces dernières à la fin de chaque cycle, à la sortie riche en azote 134 de l'OBOGS via respectivement deux vannes de régulation 167 et 177. Les deux vannes 165 et 175 d'entrée d'enceinte 164 et 174 sont commandées globalement en opposition de phase, l'enceinte de droite 172, dont le filtre a été saturé de gaz d'azote sous pression durant une phase précédente, restant isolée pendant que l'enceinte de gauche 162 assure seule, durant la phase suivante, le filtrage de l'air comprimé admis à l'entrée 136 de l'OBOGS. L'azote de cet air comprimé est adsorbé par le zéolite au cours de sa traversée de l'enceinte 162 qui fournit un gaz très riche en oxygène (environ 95%) à sa sortie 163 et, via une vanne 166 ouverte pendant cette phase, à la sortie d'oxygène 132 du générateur OBOGS.

Une vanne 176 relie la sortie oxygène 173 de l'enceinte de filtrage de droite 172 à cette même sortie 132. Les deux sorties oxygène 163 et 173 de ces enceintes de filtrage sont reliées entre elles par une vanne 180. Ces deux vannes 176 et 180 sont restées fermées pendant presque toute la phase de filtration par l'enceinte de gauche 162 qui vient d'être décrite.

Juste avant que l'enceinte de gauche 162 soit saturée en azote, les vannes 177 et 180 sont ouvertes pour permettre, d'une part, la dépressurisation de l'enceinte de droite 172, par mise en communication avec la sortie d'azote 134 et, d'autre part, la purge de l'azote stocké dans les zéolites de cette même enceinte droite avec de l'oxygène produit à la sortie 163 de l'enceinte de gauche 162. Puis l'enceinte de gauche 162 finit de se saturer en azote, la vanne 167 restant fermée.

La phase suivante commence alors avec la fermeture des vannes 165, 177, 166 et 180. L'enceinte de gauche 162 est maintenant isolée à l'état de saturation par l'azote sous pression. La vanne 175 est ouverte et la vanne 177 reste fermée. L'air sous pression est ainsi admis à l'entrée 174 de l'enceinte droite 172 maintenant purgée, tandis que la vanne de sortie oxygène 176 de cette même enceinte droite 172 est ouverte pour délivrer le gaz très riche en oxygène à la sortie 132 de l'OBOGS. Le cycle se répète ensuite de la façon qui vient d'être décrite.

Un système d'alimentation selon l'invention pris à titre d'exemple pour une pile à combustible de 30 KW comprend un empilement de 107 cellules élémentaires comprenant chacune une membrane polymère d'électrolyte solide d'environ 50 microns d'épaisseur d'une superficie de 300 cm². Les cellules peuvent fonctionner à une température de 70° C sous une pression de 4 bars absolus pour fournir une puissance d'environ 280 Watts sous un courant de 360 Ampères. Pour cette puissance la pile requiert 269 litres d'hydrogène par minute et 135 litres d'oxygène par minute. En fait, le débit d'oxygène dans cet exemple est de 155 litres par minute, soit d'environ 15% supérieur au besoin théorique. Les facteurs de fonctionnement propres à la construction de la pile et aux autres fonctions du courant de gaz comburant, mentionnés précédemment à propos de la figure 1, expliquent cet écart.

On a vu que le gaz porteur d'oxygène était fourni à l'entrée 112 de la pile à une pression de 4 bars absolus, par le compresseur dit de haute pression 140, lui-même alimenté à partir du gaz présent à la sortie 132 du générateur OBOGS 130 sous une pression de 2 bars absolus. Le compresseur consomme une puissance de 0,3 KW à cet effet. Pour l'alimentation primaire de l'OBOGS en un débit d'air comprimé à 2 bars absolus correspondant au débit demandé sur la sortie 132, le compresseur de basse pression 122 consomme une puissance de 1,5 KW. Par ailleurs l'OBOGS proprement dit consomme 0,2 KW pour extraire de l'air le débit de gaz présent à sa sortie. La puissance totale consommée par le système de la figure 2 pour effectuer l'alimentation de la pile en comburant oxygène est donc de 2 KW, soit 6,6 % de la puissance délivrée par la pile.

Dans le système de référence de la figure 1, où la pile à combustible est alimentée directement à partir de l'air ambiant comprimé à 4 atmosphères (4 bars absolus) par un compresseur unique, la puissance totale nécessaire à cette alimentation se monte à près de 6 KW, soir environ 20 % de la puissance produite par la pile à combustible. Dans ce cas, pour obtenir, toutes choses égales par ailleurs, une puissance souhaitée de 30 KW en sortie de la pile 110, il faut prévoir un empilement de 214 cellules, au lieu de 107, car la puissance que l'on peut produire sur chaque cellule ne dépasse pas la moitié de celle qui peut être obtenue quand les circuits de cathode sont alimentés en oxygène pur au lieu d'un gaz plusieurs fois plus pauvre en comburant. En outre le dimensionnement des circuits d'alimentation et des circuits internes de la pile et le rendement total disponible sont affectés négativement par le fait qu'on doive faire circuler dans les éléments de la pile une quantité de gaz cinq fois supérieure au débit d'oxygène nécessaire compte tenu des autres fonctions assignées au courant de gaz.

En conclusion, le système selon l'invention pris ici à titre d'exemple permet de réaliser une économie d'énergie de fonctionnement d'au moins 300 %. En outre le système permet de diviser par deux le nombre de cellules nécessaires pour la pile et donc la masse et le coût de l'ensemble, sachant que chaque cellule requiert des quantités substantielles de composants onéreux (plaques bipolaires, membranes polymères, GDL -Gas Diffusion Layer- et de matériaux précieux comme le platine).

Le système qui vient d'être exposé présente d'autres avantages. C'est ainsi notamment que l'on peut mettre à profit la présence d'un gaz inerte à base d'azote à la sortie 134 du générateur OBOGS de deux manières distinctes. D'une part, le gaz riche en azote sous la pression de deux bars à la sortie 156 du système peut être utilisé, pour faciliter et accélérer le processus d'extinction de la pile. D'autre part, le gaz inerte à pression atmosphérique disponible sur la sortie 154 de la turbine 150 peut être stocké et utilisé pour maintenir une atmosphère inerte autour de la pile elle-même ou du système tout entier. On contribue ainsi à la prévention de tout incident qui pourrait être lié à des fuites accidentelles ou des pertes lentes de gaz destinés à alimenter la réaction de la pile et susceptibles de constituer des mélanges explosifs.

Bien entendu, l'invention n'est pas limitée à l'exemple décrit et illustré. Elle comprend notamment les diverses modifications qui peuvent y être apportées sans sortir de son cadre défini par les revendications annexées.

## Revendications

1. Groupe électrogène à pile à combustible, comportant un empilement de cellules élémentaires, comprenant chacune une cathode et une anode en relation électrochimique avec un électrolyte, et comportant des bornes électriques de sortie propres à relier le générateur à une charge électrique, le groupe comportant un dispositif de fourniture de carburant à la pile à combustible et comportant un système d'alimentation de la pile à combustible avec un gaz comburant à base d'oxygène tiré de l'air ambiant, ledit système comprenant au moins un séparateur des composants de l'air par filtration sans changement d'état.

2. Groupe électrogène selon la revendication 1, **caractérisé en ce que** le séparateur par filtration sans changement d'état est un générateur par adsorption à pressions alternées (PSA).

3. Groupe électrogène selon la revendication 1 ou 2, **caractérisé en ce que** le système d'alimentation desdites cellules en gaz comburant à la cathode comprend un compresseur d'entrée pour alimenter l'entrée du séparateur en air ambiant sous une pression optimale pour sa décomposition en composants séparés.

4. Groupe électrogène selon l'une des revendications 1 à 3, **caractérisé en ce que** le système d'alimentation des cellules en gaz comburant comprend un compresseur sur la sortie de gaz enrichi en gaz comburant pour fournir le gaz d'alimentation à la cathode de chaque cellule sous une pression optimale.

5. Groupe électrogène selon les revendications 2 et 3, **caractérisé en ce que** la pression d'entrée du séparateur OBOGS est d'environ 2 bars absolus et la pression à l'entrée cathode des cellules de la pile est d'environ le double.

6. Groupe électrogène selon une des revendications 3 ou 5, **caractérisé en ce que** le système d'alimentation de cathode comporte une première sortie de gaz riche en oxygène et une deuxième sortie de gaz riche en éléments inertes, reliée à un circuit d'évacuation à travers un récupérateur d'énergie mécanique.

7. Groupe électrogène selon une des revendications 1 à 4, **caractérisé en ce que** le système d'alimentation de cathode comporte une première sortie de gaz riche en oxygène et une deuxième sortie de gaz riche en éléments inertes vis-à-vis des réactions d'oxydation, reliée à une enveloppe propre à entourer la pile d'une atmosphère essentiellement inerte.

8. Groupe électrogène selon une des revendications 1 à 4, **caractérisé en ce que** le système d'alimentation de cathode comporte une première sortie de gaz riche en oxygène et une deuxième sortie de gaz riche en éléments inertes vis-à-vis des réactions d'oxydation, propre à être reliée sélectivement à l'alimentation en gaz de la pile afin d'en faciliter l'extinction .

9. Système d'alimentation en gaz comburant d'une pile à combustible hydrogène embarquée sur un véhicule comportant un moteur de traction électrique alimenté par ladite pile, **caractérisé en ce qu'**il comprend un séparateur des composants de l'air ambiant par filtration sans changement d'état, un compresseur d'air pour alimenter l'entrée dudit séparateur avec air à une première pression super atmosphérique et un compresseur de gaz comburant riche en oxygène disponible à la sortie du séparateur pour alimenter l'admission de la pile en gaz comburant à une deuxième pression super atmosphérique.

10. Système d'alimentation selon la revendication 9, **caractérisé en ce que** le séparateur par filtration sans changement d'état est un générateur par adsorption d'azote à pressions alternées (PSA).

11. Procédé pour alimenter en matière consommable une pile à combustible hydrogène embarquée à bord d'un véhicule à moteur électrique de traction alimenté par ladite pile, dans lequel on utilise l'air ambiant au véhicule en le comprimant pour fournir à la pile le gaz comburant nécessaire à son fonctionnement au fur et à mesure de ses besoins, **caractérisé en ce qu'**on capte l'air ambiant, on le comprime à une première pression super atmosphérique, on envoie cet air comprimé à l'entrée d'un séparateur des composants de l'air à filtration sans changement d'état pour produire un gaz fortement enrichi en oxygène, on comprime ce gaz à une deuxième pression super atmosphérique et on l'envoie à une entrée de la pile en gaz comburant.
